# EUROPEAN PATENT APPLICATION

(11) **EP 4 836 181 A1**
(43) Date of publication of application: **04.11.2026**
(21) Application number: 24914827.1
(22) Date of filing: 15.08.2024
(51) Int. Cl.: H01M 50/591

(54) **BATTERY AND ELECTRIC DEVICE**

(30) Priority: 02.01.2024 CN 202420013029 U
(71) Applicant: Contemporary Amperex Technology Co., Limited, Ningde, Fujian 352100 (CN)
(72) Inventor: WU, Shaoji, Ningde, Fujian 352100 (CN); SHEN, Dan, Ningde, Fujian 352100 (CN); SHI, Junchao, Ningde, Fujian 352100 (CN)
(74) Representative: Gong, Jinping
(86) International application number: PCT/CN2024/112543
(87) International publication number: WO 2025/145605

(57) **Abstract**

The embodiments of the present application provide a battery and an electric device. The battery includes a battery cell group, a plurality of thermal management components, a first connecting tube, and a first protection mechanism. The battery cell group includes a plurality of battery cells. The plurality of thermal management components are spaced apart from each other in a first direction, and each thermal management component has a first end and a second end in a second direction. At least one battery cell is arranged between two adjacent thermal management components, and the first direction is perpendicular to the second direction. The first connecting tube is located on a side of the battery cell group in the second direction, and the first connecting tube connects the first ends of two adjacent thermal management components. The first protection mechanism is configured to shield the first connecting tube to limit contact between emissions from the battery cell and the first connecting tube. This reduces the probability that the emissions melt the first connecting tube, and further reduces the probability that a fluid leaks from the first connecting tube due to discharge of the emissions from the battery cell, thereby improving the reliability of the battery during use.

## Description

### CROSS-REFERENCE TO RELATED APPLICATION

The present application claims priority to Chinese Patent Application No. 202420013029.2 filed on January 2, 2024 and entitled "BATTERY AND ELECTRIC DEVICE", the content of which is incorporated herein by reference in its entirety.

### TECHNICAL FIELD

The present application relates to the technical field of batteries, and in particular, to a battery and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

In the development of the battery technology, in addition to improving the performance of batteries, the reliability of batteries during use is also an essential consideration.

Therefore, how to improve the reliability of batteries is an urgent problem to be solved in the battery technology.

### SUMMARY

In view of the above problem, embodiments of the present application provide a battery and an electric device to improve the reliability of the battery during use.

In a first aspect, the embodiments of the present application provide a battery. The battery includes a battery cell group, a plurality of thermal management components, a first connecting tube, and a first protection mechanism. The battery cell group includes a plurality of battery cells. The plurality of thermal management components are spaced apart from each other in a first direction, and each thermal management component has a first end and a second end in a second direction. At least one battery cell is arranged between two adjacent thermal management components, and the first direction is perpendicular to the second direction. The first connecting tube is located on a side of the battery cell group in the second direction, and the first connecting tube connects the first ends of two adjacent thermal management components. The first protection mechanism is configured to shield the first connecting tube to limit contact between emissions from the battery cell and the first connecting tube.

In the technical solutions of the embodiments of the present application, the first protection mechanism is configured to shield the first connecting tube, such that when the battery cell discharges emissions due to thermal runaway, the first protection mechanism can limit contact between the emissions and the first connecting tube. This reduces the probability that the emissions melt the first connecting tube, and further reduces the probability that a fluid leaks from the first connecting tube due to discharge of the emissions from the battery cell, thereby improving the reliability of the battery during use.

In some embodiments, the battery further includes a case, and the battery cells and the thermal management components are accommodated in the case. The case includes a bottom wall and a top wall arranged opposite to each other in a third direction, and a pressure relief mechanism is arranged at an end of the battery cell facing the top wall. In the third direction, at least a part of the first protection mechanism is located between the top wall and the first connecting tube, and every two of the first direction, the second direction, and the third direction are perpendicular to each other. The case provides a mounting space for the battery cells and the thermal management components, which improves the integration of the battery. The pressure relief mechanism is arranged at an end of the battery cell facing the top wall, such that when the pressure relief mechanism is braked, the emissions enter the case in the third direction, such that the emissions are located between the top wall and the battery cell, and in the third direction, a part of the first protection mechanism located between the top wall and the first connecting tube can limit the contact between the emissions and the first connecting tube.

In some embodiments, in the third direction, a projection of the first protection mechanism does not overlap with a projection of the pressure relief mechanism. Such a design prevents the emissions discharged by the pressure relief mechanism from directly contacting the first protection mechanism in the third direction. Thus, the emissions are limited from passing through a gap between the first protection mechanism and the battery cell group in the third direction to contact the first connecting tube.

In some embodiments, the case has a first side wall and a second side wall arranged opposite to each other in the second direction. In the second direction, the first connecting tube is located between the first side wall and the battery cell group. At least a part of the first protection mechanism is located between the first side wall and the battery cell group. Such a design allows the case to vibrate under the action of an external force. As a result, when the battery cell group moves in the second direction relative to the case, the first protection mechanism will abut against the case earlier than the battery cell group, thereby buffering the battery cell group. This is beneficial to reducing the severity of damage to the battery caused by collision due to the external force.

In some embodiments, the first protection mechanism includes a first protective cover, and the battery cell group has a first side surface facing the first connecting tube. The first protective cover and the first side surface jointly form a first accommodating cavity, and at least a part of the first connecting tube is located in the first accommodating cavity. At least a part of the first connecting tube is arranged in the first accommodating cavity jointly formed by the first protective cover and the first side surface, which is beneficial to limiting the contact between the emissions and the first connecting tube.

In some embodiments, the first protective cover is connected to the battery cell group and/or the case. In this way, the battery cell group and/or the case can provide a support force for the first protective cover. Especially, when the first protective cover is connected to both the battery cell group and the case, the stability of a part of the first accommodating cavity proximal to the case and a part of the first accommodating cavity proximal to the battery cell group can be improved, which is beneficial to improving the stability of the first accommodating cavity.

In some embodiments, the first protective cover includes a first top plate and a first side plate, and one end of the first top plate is connected to the battery cell group. The other end of the first top plate is connected to the first side plate. The first top plate shields the first connecting tube in the third direction, and the first side plate shields the first connecting tube in the second direction. The first top plate is configured to shield the first connecting tube in the third direction, such that the emissions located between the top wall and the first top plate can be limited from contacting the first connecting tube in the third direction. The first side plate is configured to shield the first connecting tube in the second direction, such that the emissions between an inner wall of the case and the first side plate can be limited from contacting the first connecting tube in the second direction.

In some embodiments, an end of the first side plate distal to the first top plate abuts against the bottom wall. The end of the first side plate distal to the first top plate abuts against the bottom wall, such that the bottom wall can provide a support force for the first side plate, which is beneficial to improving the stability of the first accommodating cavity. At the same time, the first side plate abuts against the bottom wall, which can limit the emissions from entering the first accommodating cavity through a gap between the first side plate and the bottom wall in the third direction, which is beneficial to reducing the occurrence of arcing between the case and the battery cell group.

In some embodiments, the first protective cover further includes a first bottom plate, one end of the first bottom plate is connected to the battery cell group, the other end of the first bottom plate is connected to the first side plate, and in the third direction, the first connecting tube is located between the first top plate and the first bottom plate. The first connecting tube is arranged between the first top plate and the first bottom plate in the third direction, thereby limiting the contact between the emissions and the first connecting tube in the third direction.

In some embodiments, the first bottom plate abuts against the bottom wall. The first bottom plate abuts against the bottom wall, such that the bottom wall may provide a support force for the first bottom plate and the first side plate, which is beneficial to improving the stability of the first accommodating cavity. At the same time, the first bottom plate abuts against the bottom wall, such that the emissions can be limited from accumulating in a gap between the first bottom plate and the bottom wall in the third direction, which is beneficial to reducing the occurrence of arcing between the case and the battery cell group.

In some embodiments, first openings are formed at two ends of the first accommodating cavity in the first direction. The first protection mechanism further includes a first covering plate, and the first covering plate closes the first opening. Such a design can limit the emissions from entering the first accommodating cavity in the first direction through the first opening on the first protective cover and contacting the first connecting tube.

In some embodiments, the first protection mechanism is made of a heat-resistant material. The heat-resistant material may reduce the probability that the emissions melt through the first protection mechanism. This improves the reliability of the first protection mechanism in shielding the first connecting tube to some extent.

In some embodiments, the battery further includes a second connecting tube and a second protection mechanism. The second connecting tube is located on a side of the battery cell group facing away from the first connecting tube in the second direction. The second connecting tube connects the second ends of two adjacent thermal management components. The second protection mechanism is configured to shield the second connecting tube to limit contact between the emissions from the battery cell and the second connecting tube. Such a design reduces the probability that the emissions melt the second connecting tube, thereby reducing the probability that a fluid leaks from the second connecting tube due to discharge of the emissions from the battery cell, and improving the reliability of the battery during use.

In some embodiments, the second protection mechanism includes a second protective cover, and the battery cell group has a second side surface facing the second connecting tube. The second protective cover and the second side surface jointly form a second accommodating cavity, and at least a part of the second connecting tube is located in the second accommodating cavity. At least a part of the second connecting tube is arranged in the second accommodating cavity jointly formed by the second protective cover and the second side surface, which is beneficial to limiting the contact between the emissions and the second connecting tube.

In a second aspect, the embodiments of the present application provide an electric device. The electric device includes the battery according to the above embodiments, and the battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic diagram of an exploded structure of a first battery according to some embodiments of the present application;
FIG. 3 is a schematic structural diagram of a first battery according to some embodiments of the present application;
FIG. 4 is a schematic diagram of an exploded structure of a second battery according to some embodiments of the present application;
FIG. 5 is a schematic diagram of a cross-sectional structure of a second battery in a first direction X according to some embodiments of the present application;
FIG. 6 is a schematic diagram of a cross-sectional structure of a third battery in a first direction X according to some embodiments of the present application;
FIG. 7 is a schematic diagram of a cross-sectional structure of a fourth battery in a first direction X according to some embodiments of the present application;
FIG. 8 is a schematic diagram of a cross-sectional structure of a fifth battery in a first direction X according to some embodiments of the present application;
FIG. 9 is a schematic diagram of a cross-sectional structure of a sixth battery in a first direction X according to some embodiments of the present application;
FIG. 10 is a schematic structural diagram of a first protective cover according to some embodiments of the present application;
FIG. 11 is a schematic diagram of an exploded structure of a second battery without a first part according to some embodiments of the present application;
FIG. 12 is a schematic structural diagram of another first protective cover according to some embodiments of the present application; and
FIG. 13 is a schematic diagram of an exploded structure of a fourth battery without a first part according to some embodiments of the present application.

The drawings are not drawn to scale.

Description of the reference numerals: 1000-vehicle; 100-battery; 200-controller; 300-motor; 10-case; 11-first part; 111-top wall; 12-second part; 121-bottom wall; 122-first side wall; 123-second side wall; 20-battery cell group; 21-battery cell; 211-pressure relief mechanism; 212-first side surface; 213-second side surface; 30-thermal management component; 31-first end; 32-second end; 40-first connecting tube; 41-second connecting tube; 50-first protection mechanism; 501-first accommodating cavity; 502-second accommodating cavity; 51-first protective cover; 511-first top plate; 512-first side plate; 513-first bottom plate; 52-first covering plate; 53-second protection mechanism; 531-second protective cover.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

Unless otherwise defined, all technical and scientific terms used herein have the same meaning as commonly understood by those skilled in the art to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "plurality of" refers to two or more (including two). Similarly, "plurality of groups" refers to two or more (including two) groups, and "plurality of pieces" refers to two or more (including two) pieces, unless otherwise explicitly and specifically defined.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

The term "plurality of" used in the present application refers to two or more (including two). Similarly, "plurality of groups" refers to two or more (including two) groups, and "plurality of pieces" refers to two or more (including two) pieces.

In the embodiments of the present application, the battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. The battery generally includes a case configured to encapsulate one or more battery cells. The case can prevent a liquid or other foreign matters from affecting the charging or discharging of the battery cells.

A battery cell includes an electrode assembly and an electrolyte. The electrode assembly is composed of a positive electrode plate, a negative electrode plate, and a separator. The battery cell primarily works by the movement of metal ions between the positive electrode plate and the negative electrode plate.

Battery technology advancements require consideration of various design factors at the same time, such as energy density, cycle life, discharge capacity, charging and discharging rate, and other performance parameters. In addition, the reliability of the battery during use also needs to be considered.

Emissions from the battery cell mentioned in the embodiments of the present application include, but are not limited to: electrolyte, dissolved or split positive and negative electrode plates, fragments of a separator, high-temperature and high-pressure gas generated by reaction, flame, and the like.

In the case of a short circuit, overcharging, or the like, thermal runaway may occur within the battery cell, resulting in a rapid increase in pressure or temperature. In this case, the battery cell can release the internal pressure and temperature outward to prevent explosion and fire of the battery cell.

In order to improve the working reliability and stability of the battery in the battery assembly solution, a thermal management component is usually arranged in the case. The thermal management component is configured to accommodate a fluid to regulate the temperature of the plurality of battery cells. In some cases, to increase the contact area between the thermal management component and the battery cell, the thermal management component may be arranged on a large-surface side of the battery cell. At the same time, to enable the fluid in a plurality of thermal management components to circulate between the plurality of thermal management components, in some cases, a first connecting tube may be arranged on a non-large-surface side of the battery to connect the plurality of thermal management components. Therefore, when the battery cell undergoes thermal runaway, the emissions from the battery cell rebound from the inner wall of the case, and thus may fall on the first connecting tube and melt through the first connecting tube, causing a safety problem.

In view of this, the embodiments of the present application provide a battery. The battery includes a battery cell group, a plurality of thermal management components, a first connecting tube, and a first protection mechanism. The battery cell group includes a plurality of battery cells. The plurality of thermal management components are spaced apart from each other. At least one battery cell is arranged between two adjacent thermal management components. The first connecting tube is configured to connect two adjacent thermal management components.

The first protection mechanism is configured to shield the first connecting tube to limit contact between emissions from the battery cell and the first connecting tube. In this way, when the battery cell discharges emissions due to thermal runaway, the first protection mechanism can limit contact between the emissions and the first connecting tube, thereby reducing the probability that the emissions melt the first connecting tube, and further reducing the probability that a fluid leaks from the first connecting tube due to discharge of the emissions from the battery cell. This improves the reliability of the battery during use.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

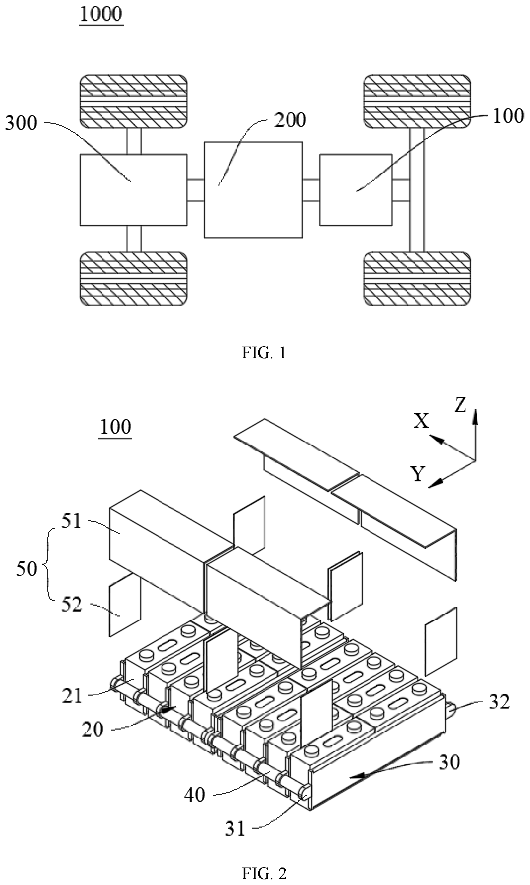

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is arranged inside the vehicle 1000, and the battery 100 may be arranged at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source for the vehicle 1000, but also as a driving power source for the vehicle 1000 to, replacing or partially replacing fuel or natural gas, provide driving power for the vehicle 1000.

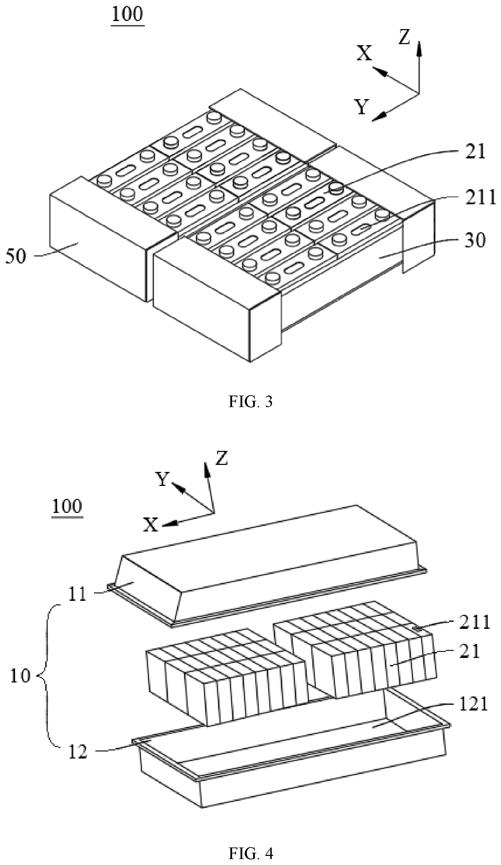

According to some embodiments of the present application, referring to FIG. 2, and further referring to FIG. 3, FIG. 2 is a schematic diagram of an exploded structure of a first battery 100 according to some embodiments of the present application, and FIG. 3 is a schematic structural diagram of a first battery 100 according to some embodiments of the present application. Some embodiments of the present application provide a battery 100, including a battery cell group 20, a plurality of thermal management components 30, a first connecting tube 40, and a first protection mechanism 50. The battery cell group 20 includes a plurality of battery cells 21. The plurality of thermal management components 30 are spaced apart from each other in a first direction X, and each thermal management component 30 has a first end 31 and a second end 32 in a second direction Y. At least one battery cell 21 is arranged between two adjacent thermal management components 30, and the first direction X is perpendicular to the second direction Y. The first connecting tube 40 is located on a side of the battery cell 21 group in the second direction Y, and the first connecting tube 40 connects the first ends 31 of two adjacent thermal management components 30. The first protection mechanism 50 is configured to shield the first connecting tube 40 to limit contact between emissions from the battery cell 21 and the first connecting tube 40.

In the figure, the first direction X is a length direction of the battery 100, the second direction Y is a width direction of the battery 100, and a third direction Z is a height direction of the battery 100.

To meet different power usage requirements, the battery 100 according to some embodiments of the present application may include a battery cell group 20, where the battery cell group 20 may include a plurality of battery cells 21, and the plurality of battery cells 21 may be connected in series, in parallel, or in series-parallel. The series-parallel connection refers to a combination of series connection and parallel connection. The battery 100 may also include a plurality of battery cell groups 20. For example, a plurality of battery cells 21 may be first connected in series, in parallel, or in series-parallel to form battery cell groups 20, and then a plurality of battery cell groups 20 are connected in series, in parallel, or in series-parallel to form the battery 100. That is, the plurality of battery cells 21 may directly form the battery 100, or may first form the battery cell groups 20, and the battery cell groups 20 then form the battery 100.

It can be understood that, in the first direction X, the gap between two adjacent battery cells 21 is filled with an adhesive to limit the emissions from passing through the gap between the two adjacent battery cells 21 in the first direction X and abutting against the first connecting tube 40.

The thermal management component 30 is configured to regulate the temperature of the battery cells 21. The thermal management component 30 may accommodate a fluid or a solid-liquid phase change material to regulate the temperature of the plurality of battery cells 21. Specifically, the fluid may be a liquid or a gas. The solid-liquid phase change material is originally a solid and can become a liquid after heat absorption.

The temperature regulation refers to heating or cooling the plurality of battery cells 21. In the case of cooling or lowering the temperature of the battery cells 21, the thermal management component 30 is configured to accommodate a cooling fluid or a solid-liquid phase change material to lower the temperature of the plurality of battery cells 21. In this case, the thermal management component 30 may also be referred to as a cooling component, a cooling system, a cooling plate, or the like, and the fluid contained therein may also be referred to as a cooling medium or a cooling fluid, and more specifically, may be referred to as a coolant liquid or a cooling gas. In addition, the thermal management component 30 may also be configured to heat the plurality of battery cells 21, which is not limited in the embodiments of the present application. Optionally, the fluid may flow circularly to achieve a better temperature regulation effect. Optionally, the fluid may be water, a mixed solution of water and ethylene glycol, air, or the like.

It can be understood that the thermal management component 30 may be fixedly connected to the battery cell 21 by using a binder; alternatively, the thermal management component 30 may be clamped and fixed by two adjacent battery cells 21, which is not limited in the embodiments of the present application.

The first connecting tube 40 is configured to connect the first ends 31 of two adjacent thermal management components 30. The fluid or the solid-liquid phase change material may flow between the two connected adjacent thermal management components 30 through the first connecting tube 40.

It can be understood that the first connecting tube 40 may be made of plastic, and the first connecting tube 40 may be connected to the first end 31 by using a binder; alternatively, the first connecting tube 40 may also be connected to the first end 31 in a manner in which the first connecting tube and the first end 31 are integrally formed, which is not limited in the embodiments of the present application.

That the first protection mechanism 50 is configured to shield the first connecting tube 40 means that at least a part of the first protection mechanism 50 is located between the position where the battery cell 21 discharges emissions and the first connecting tube 40.

Therefore, when the battery cell 21 discharges emissions due to thermal runaway, the first protection mechanism 50 can limit contact between the emissions and the first connecting tube 40, thereby reducing the probability that the emissions melt the first connecting tube 40, and further reducing the probability that a fluid leaks from the first connecting tube 40 due to discharge of the emissions from the battery cell 21. This improves the reliability of the battery 100 during use.

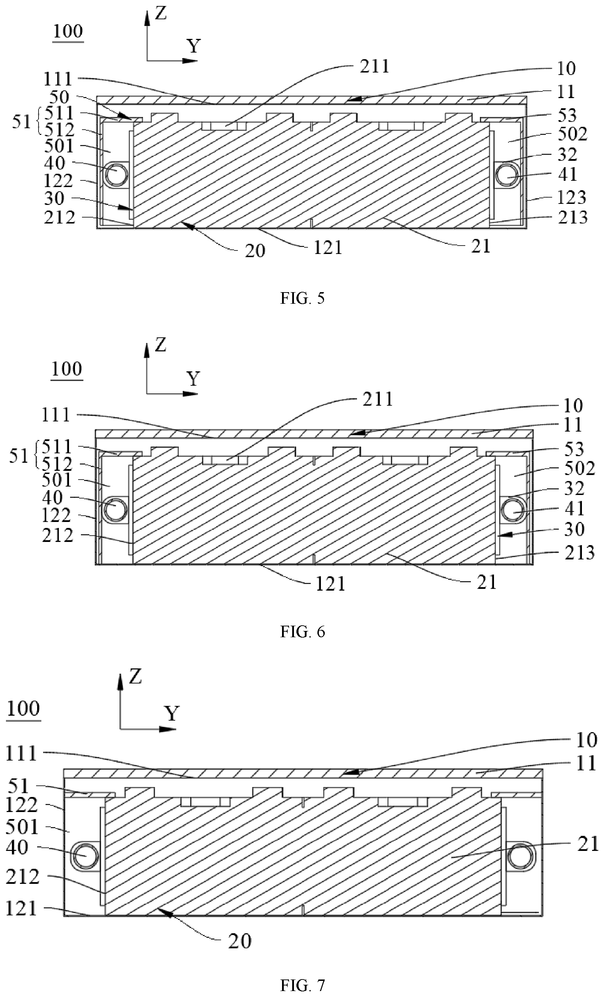

According to some embodiments of the present application, optionally, referring to FIG. 4, and further referring to FIG. 5, FIG. 4 is a schematic diagram of an exploded structure of a second battery 100 according to some embodiments of the present application, and FIG. 5 is a schematic diagram of a cross-sectional structure of a second battery 100 in the first direction X according to some embodiments of the present application. The battery 100 may further include a case 10, and the battery cells 21 and the thermal management components 30 are accommodated in the case 10. The case 10 includes a bottom wall 121 and a top wall 111 arranged opposite to each other in the third direction Z, and a pressure relief mechanism 211 is arranged at an end of the battery cell 21 facing the top wall 111. In the third direction Z, at least a part of the first protection mechanism 50 is located between the top wall 111 and the first connecting tube 40.

The case 10 is a housing for providing a stable and sealed working environment for the battery cells 21.

It can be understood that, referring to FIG. 4, the case 10 may include two parts, herein referred to as a first part 11 and a second part 12, respectively. The first part 11 and the second part 12 are snap-fitted together in the third direction Z. The shapes of the first part 11 and the second part 12 may be determined based on the shapes of the plurality of battery cell groups 20, and the first part 11 and the second part 12 may each be provided with one opening. For example, the first part 11 and the second part 12 may each be a hollow rectangular parallelepiped, each having only one open face. The opening of the first part 11 and the opening of the second part 12 may be arranged opposite to each other, and the first part 11 and the second part 12 are snap-fitted together to form the case 10 with an enclosed chamber. The battery cells 21 and the thermal management components 30 are combined and then placed in the case 10 formed after the first part 11 and the second part 12 are snap-fitted together.

Optionally, the first part 11 and the second part 12 may be made of a material with a certain hardness and strength (for example, an aluminum alloy), such that the case 10 is not easily deformed when being squeezed or collided. This enables the battery cell 21 to have a higher structural strength, which is beneficial to reducing the severity of damage to the battery 100 caused by collision due to an external force.

The top wall 111 and the bottom wall 121 are two inner walls distributed in the third direction Z in the case 10, and are perpendicular to the third direction Z. The bottom wall 121 is configured to place the battery cells 21 and the thermal management components 30. In addition, the bottom wall 121 may also be provided with other components. For example, the bottom wall 121 may also be provided with a structure for fixing the battery cells 21 and/or the thermal management components 30.

It can be understood that the bottom wall 121 may be located on the second part 12, and when the bottom wall 121 is located on the second part 12, the top wall 111 may be located on the first part 11.

For the battery cells 21, the main safety hazards come from the charging and discharging processes, and at the same time, there is also a suitable ambient temperature design. In order to effectively avoid unnecessary losses, there are generally at least three protective measures for the battery cells 21. Specifically, the protective measures include at least a switch element, selection of an appropriate separator material, and a pressure relief mechanism 211.

The pressure relief mechanism 211 refers to an element or a component that is actuated to relieve the internal pressure or reduce the internal temperature of the battery cell 21 when the internal pressure or temperature or another condition reaches a preset threshold. The designed threshold varies according to different design requirements. The threshold may depend on the material of one or more of the positive electrode plate, the negative electrode plate, the electrolyte, and the separator in the battery cell 21. The pressure relief mechanism 211 may take the form of an anti-explosion valve, a gas valve, a pressure relief valve, a safety valve, or the like, and may specifically adopt a pressure-sensitive or temperature-sensitive element or configuration. That is, when the internal pressure or temperature of the battery cell 21 reaches a preset threshold, the pressure relief mechanism 211 is actuated or the weak structure provided in the pressure relief mechanism 211 is destroyed to form an opening or a channel for relieving the internal pressure or reducing the internal temperature.

The "actuate" mentioned in the embodiments of the present application means that the pressure relief mechanism 211 generates an action or is activated to a certain state to relieve the internal pressure and reduce the internal temperature of the battery cell 21, thereby relieving the internal pressure and reducing the internal temperature of the battery cell 21. The actions generated by the pressure relief mechanism 211 may include, but are not limited to: cracking, fracture, melting, tearing, or opening of at least a part of the pressure relief mechanism 211. When the pressure relief mechanism 211 is actuated, high-temperature and high-pressure substances inside the battery cell 21 are discharged outwards from the actuated part as emissions. In this way, the battery cell 21 can undergo pressure relief and temperature relief under the condition of controllable pressure or temperature, thereby preventing potentially more severe accidents.

It can be understood that the pressure relief mechanism 211 is arranged at the end of the battery cell 21 facing the top wall 111, such that when the pressure relief mechanism 211 is braked, the emissions enter the case 10 in the third direction Z, such that the emissions are located between the top wall 111 and the battery cell 21, and then in the third direction Z, a part of the first protection mechanism 50 located between the top wall 111 and the first connecting tube 40 can limit the contact between the emissions and the first connecting tube 40.

At least a part of the first protection mechanism 50 is arranged between the top wall 111 and the first connecting tube 40 in the third direction Z, such that the emissions discharged from the pressure relief mechanism 211 are limited from contacting the first connecting tube 40, which is beneficial to improving the reliability of the battery 100 during use.

According to some embodiments of the present application, optionally, with continued reference to FIG. 5, in the third direction Z, the projection of the first protection mechanism 50 does not overlap with the projection of the pressure relief mechanism 211.

In the third direction Z, the projection of the first protection mechanism 50 refers to a projection of the first protection mechanism 50 on any plane perpendicular to the third direction Z.

In the third direction Z, the projection of the pressure relief mechanism 211 refers to a projection of the pressure relief mechanism 211 on any plane perpendicular to the third direction Z.

It can be understood that, when in the third direction Z, the projection of the first protection mechanism 50 does not overlap with the projection of the pressure relief mechanism 211, the emissions discharged from the pressure relief mechanism 211, when moving in the third direction Z toward the top wall 111, do not contact the first protection mechanism 50, thereby reducing the probability that the emissions pass through the gap between the first protection mechanism 50 and the battery cell 21 in the third direction Z to contact the first connecting tube 40.

According to some embodiments of the present application, optionally, with continued reference to FIG. 5, the case 10 has a first side wall 122 and a second side wall 123 arranged opposite to each other in the second direction Y. In the second direction Y, the first connecting tube 40 is located between the first side wall 122 and the battery cell group 20. At least a part of the first protection mechanism 50 is located between the first side wall 122 and the battery cell group 20.

The first side wall 122 and the second side wall 123 are two inner walls distributed in the second direction Y in the case 10, and are perpendicular to the second direction Y. The first side wall 122 faces the first connecting tube 40.

It can be understood that since at least a part of the first protection mechanism 50 is located between the first side wall 122 and the battery cell group 20, when the case 10 vibrates under the action of an external force to cause the battery cell group 20 to move in the second direction Y relative to the case 10, the first protection mechanism 50 will abut against the case 10 earlier than the battery cell group 20, thereby buffering the battery cell group 20. This is beneficial to reducing the severity of damage to the battery 100 caused by collision.

According to some embodiments of the present application, optionally, with continued reference to FIG. 5, and further referring to FIGs. 6 to 9, FIGs. 6 to 9 are schematic diagrams of cross-sectional structures of several possible batteries 100 of the battery 100 in the first direction X according to some embodiments of the present application. The first protection mechanism 50 includes a first protective cover 51, and the battery cell group 20 has a first side surface 212 facing the first connecting tube 40. The first protective cover 51 and the first side surface 212 jointly form a first accommodating cavity 501, and at least a part of the first connecting tube 40 is located in the first accommodating cavity 501.

The first protective cover 51 refers to a component that forms the first accommodating cavity 501 jointly with the first side surface 212.

The first side surface 212 refers to a surface of the battery cell 21 facing the first connecting tube 40 and perpendicular to the second direction Y.

The first accommodating cavity 501 is configured to accommodate at least a part of the first connecting tube 40, where referring to FIG. 5, the first accommodating cavity 501 may be unsealed. In addition, referring to FIGs. 6 to 9, the first accommodating cavity 501 may also be sealed.

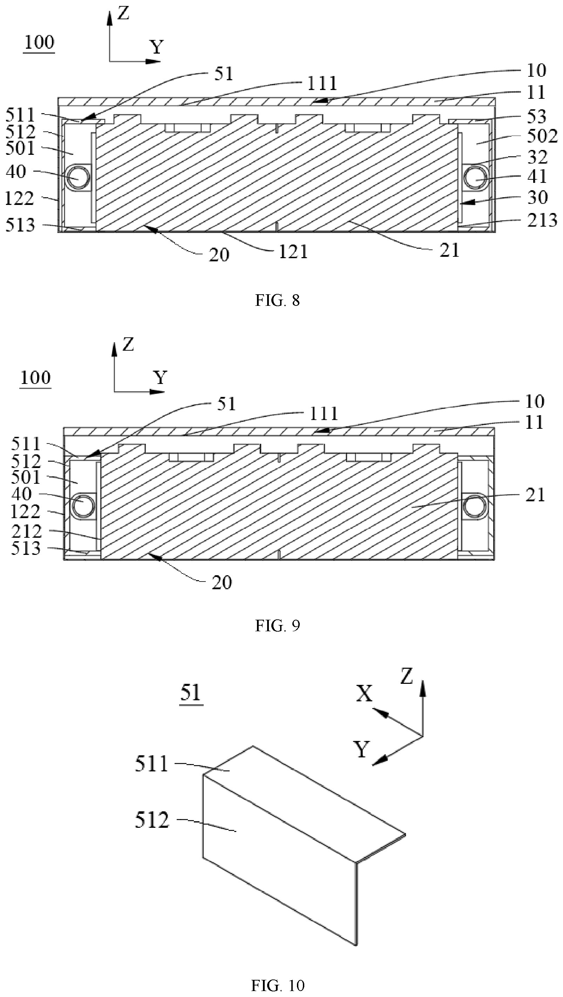

Optionally, referring to FIGs. 8 and 9, the first accommodating cavity 501 may be jointly formed by the first protective cover 51 and the first side surface (not shown in the figures). Referring to FIGs. 5 and 6, the first accommodating cavity 501 may also be jointly formed by the first protective cover 51, the first side surface 212, and the bottom wall 121. Referring to FIG. 7, the first accommodating cavity 501 may also be jointly formed by the first protective cover 51, the first side surface 212, the first side wall 122, and the bottom wall 121. This is not limited in the embodiments.

It can be understood that at least a part of the first connecting tube 40 is arranged in the first accommodating cavity 501, such that when the pressure relief mechanism 211 discharges emissions, the emissions rebounding from the top wall 111 will first contact the inner wall of the case 10 and/or the outer side of the first protective cover 51, thereby limiting the contact between the emissions and the first connecting tube 40.

According to some embodiments of the present application, optionally, with continued reference to FIG. 5, and further referring to FIGs. 6 to 9, the first protective cover 51 is connected to the battery cell group 20 and/or the case 10.

It can be understood that the first protective cover 51 may be fixedly connected to the battery cell group 20 and/or the case 10 by using a binder; alternatively, the first protective cover 51 may be clamped and fixed by the first side surface 212 and the first side wall 122, which is not limited in the embodiments of the present application.

Optionally, when the first protective cover 51 is connected to the battery cell group 20, referring to FIGs. 5 to 8, the first protective cover 51 may be connected to the surface of the battery cell group 20 facing the top wall 111. Referring to FIG. 9, the first protective cover 51 can be connected to the first side surface 212 of the battery cell group 20.

Optionally, the gap at the connection between the first protective cover 51 and the battery cell group 20 can be filled with an adhesive to limit the emissions from passing through the gap at the connection between the first protective cover 51 and the battery cell group 20 to contact the first connecting tube 40.

It can be understood that the part of the first protective cover 51 connected to the battery cell group 20 and/or the case 10 can provide a support force for the first protective cover 51 around the connecting part, thereby providing a support function for the first accommodating cavity 501. When the first protective cover 51 is connected to both the battery cell group 20 and the case 10, the stability of the side of the first accommodating cavity 501 proximal to the case 10 and the side of the first accommodating cavity 501 proximal to the battery cell group 20 can be improved, which is beneficial to improving the stability of the first accommodating cavity 501.

In addition, when the first protective cover 51 is connected to only one of the battery cell group 20 and the case 10, the first protective cover 51 may not be adapted to the size of the gap between the battery cell group 20 and the case 10, such that the first protective cover 51 can be applied to different combinations of the battery cell group 20 and the case 10, which is beneficial to increasing the application range of the first protective cover 51.

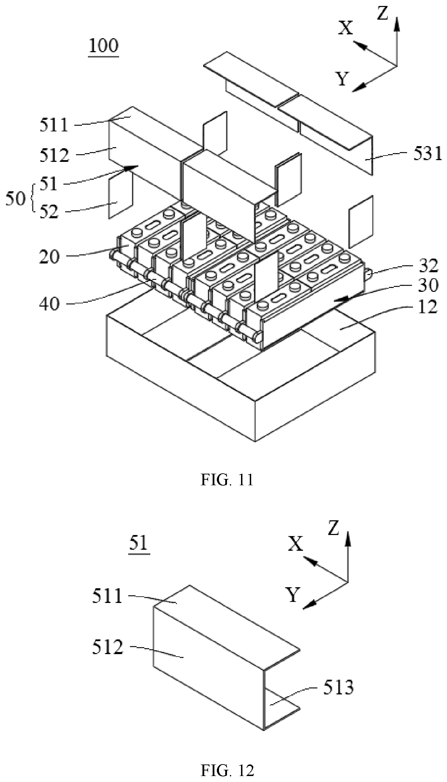

According to some embodiments of the present application, optionally, with continued reference to FIG. 5, and further referring to FIGs. 6, 10, and 11, FIG. 10 is a schematic structural diagram of a first protective cover 51 according to some embodiments of the present application, and FIG. 11 is a schematic diagram of an exploded structure of a second battery 100 without a first part 11 according to some embodiments of the present application. The first protective cover 51 includes a first top plate 511 and a first side plate 512. One end of the first top plate 511 is connected to the battery cell group 20. The other end of the first top plate 511 is connected to the first side plate 512. The first top plate 511 shields the first connecting tube 40 in the third direction Z, and the first side plate 512 shields the first connecting tube 40 in the second direction Y.

The first top plate 511 is the part of the first protective cover 51 connected to the battery cell group 20, and the first top plate 511 is configured to shield the space between the first connecting tube 40 and the top wall 111 in the third direction Z to limit the contact between the emissions located between the top wall 111 and the first top plate 511 and the first connecting tube 40 in the third direction Z.

The connection mode between the first top plate 511 and the battery cell group 20 is the same as the connection mode between the first protective cover 51 and the battery cell group 20, which will not be repeated here.

The first side plate 512 is a part of the first protective cover 51 extending in the third direction Z, and the first side plate 512 is configured to shield the space between the first connecting tube 40 and the first side wall 122 in the second direction Y to limit the contact between the emissions located between the first side wall 122 and the first side plate 512 and the first connecting tube 40 in the second direction Y.

It can be understood that the first side plate 512 and the first top plate 511 may be connected and fixed by using a binder; alternatively, the first side plate 512 and the first top plate 511 may be integrally formed, which is not limited in the embodiments.

The first top plate 511 and the first side plate 512 are arranged such that the emissions discharged from the pressure relief mechanism 211 will not contact the first connecting tube 40 after rebounding once from the top wall 111 and/or the bottom wall 121, thereby limiting the contact between the emissions with a high temperature and the first connecting tube 40.

According to some embodiments of the present application, optionally, with continued reference to FIG. 6, the end of the first side plate 512 distal to the first top plate 511 abuts against the bottom wall 121.

It can be understood that the end of the first side plate 512 distal to the first top plate 511 may abut against the bottom wall 121, or may be fixedly connected to the bottom wall 121 by using a binder, which is not limited in the embodiments.

It can be understood that the end of the first side plate 512 distal to the first top plate 511 abuts against the bottom wall 121, such that the bottom wall 121 can provide a support force for the first side plate 512, which is beneficial to improving the stability of the first accommodating cavity 501.

At the same time, the first side plate 512 abuts against the bottom wall 121, which can limit the emissions from entering the first accommodating cavity 501 through the gap between the first side plate 512 and the bottom wall 121 in the third direction Z. Thus, the emissions are limited from accumulating between the first side plate 512 and the bottom wall 121. In this way, the arcing between the first side wall 122 and the battery cell group 20 caused by the emissions is reduced, which is beneficial to reducing fire caused by the arcing.

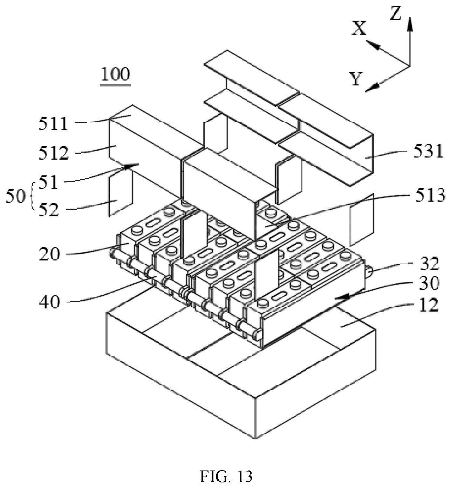

According to some embodiments of the present application, optionally, with continued reference to FIG. 8, and further referring to FIGs. 9, 12, and 13, FIG. 12 is a schematic structural diagram of another first protective cover 51 according to some embodiments of the present application, and FIG. 13 is a schematic diagram of an exploded structure of a fourth battery 100 without a first part 11 according to some embodiments of the present application. The first protective cover 51 further includes a first bottom plate 513, one end of the first bottom plate 513 is connected to the battery cell group 20, the other end of the first bottom plate 513 is connected to the first side plate 512, and in the third direction Z, the first connecting tube 40 is located between the first top plate 511 and the first bottom plate 513.

The first bottom plate 513 is a part of the first protective cover 51 located between the bottom wall 121 and the first connecting tube 40, and the first bottom plate 513 is configured to shield the space between the first connecting tube 40 and the bottom wall 121 in the second direction Y to limit the emissions from contacting the first connecting tube 40 after rebounding from the bottom wall 121.

It can be understood that the first side plate 512 and the first bottom plate 513 may be connected and fixed by using a binder; alternatively, the first side plate 512, the first top plate 511, and the first bottom plate 513 may be fixed to each other by integrally forming, which is not limited in the embodiments.

It can be understood that the end of the first bottom plate 513 distal to the first side plate 512 may abut against the first side surface 212; alternatively, the end of the first bottom plate 513 distal to the first side plate 512 may be fixedly connected to the first side surface 212 by using a binder, which is not limited in the embodiments.

It can be understood that the first bottom plate 513 abuts against the first side surface 212, such that the battery cell group 20 can provide a support force for the first protective cover 51, which is beneficial to improving the stability of the first accommodating cavity 501.

At the same time, the first bottom plate 513 abuts against the first side surface 212, such that the emissions can be limited from entering the first accommodating cavity 501 from the gap between the first bottom plate 513 and the first side surface 212, which is beneficial to limiting the emissions from accumulating in the first accommodating cavity 501.

The first connecting tube 40 is arranged between the first top plate 511 and the first bottom plate 513 in the third direction Z, thereby limiting the contact between the emissions and the first connecting tube 40 in the third direction Z.

According to some embodiments of the present application, optionally, with continued reference to FIG. 8, the first bottom plate 513 abuts against the bottom wall 121.

It can be understood that the first bottom plate 513 and the bottom wall 121 may abut against each other; alternatively, the first bottom plate 513 and the bottom wall 121 may be connected and fixed by using a binder, which is not limited in the embodiments.

The first bottom plate 513 abuts against the bottom wall 121, such that the bottom wall 121 can provide a support force for the first bottom plate 513 and the first side plate 512, which is beneficial to improving the stability of the first accommodating cavity 501.

At the same time, the first bottom plate 513 abuts against the bottom wall 121, such that the emissions are limited from accumulating in the gap between the first bottom plate 513 and the bottom wall 121. In this way, the arcing between the first side wall 122 and the battery cell group 20 caused by the emissions is reduced, which is beneficial to reducing fire caused by the arcing.

According to some embodiments of the present application, optionally, with continued reference to FIG. 8 and continued reference to FIG. 13, first openings are formed at two ends of the first accommodating cavity 501 in the first direction X (not shown in the figures). The first protection mechanism 50 further includes a first covering plate 52, and the first covering plate 52 closes the first opening (not shown in the figures).

The first covering plate 52 refers to a component that is snap-fitted with the first protective cover 51 in the first direction X to close the first opening (not shown in the figures) and forms the first accommodating cavity 501 with the first protective cover 51 and the first side surface 212.

The shape of the first covering plate 52 may be determined based on the shape of the first opening (not shown in the figures), and the first covering plate 52 may also be provided with one opening. For example, the first covering plate 52 is of a hollow structure, a surface of the first covering plate 52 is provided with an opening, and the opening and the first opening (not shown in the figures) are arranged opposite to each other. The first covering plate 52 and the first protective cover 51 are snap-fitted to each other, and form the first accommodating cavity 501 jointly with the first side surface 212.

It can be understood that the first covering plate 52 may be fixedly connected to the first protective cover 51 by using a binder; alternatively, the first covering plate 52 and the first protective cover 51 may be integrally formed, which is not limited in the embodiments.

By arrangement of the first covering plate 52, the emissions can be limited from entering the first accommodating cavity 501 in the first direction X through the first opening (not shown in the figures) on the first protective cover 51 and contacting the first connecting tube 40.

According to some embodiments of the present application, optionally, the first protection mechanism 50 is made of a heat-resistant material.

The heat-resistant material refers to a material that can meet the requirement of no structural damage at a high temperature of 600 °C or higher.

It can be understood that the heat-resistant material may be a flexible material or a rigid material. When the heat-resistant material is a rigid material, the first protection mechanism 50 has a certain strength, such that when the first protection mechanism 50 abuts against the case 10 earlier than the battery cell group 20 due to vibration, it can provide a buffering function for the battery cell group 20, which is beneficial to reducing the severity of damage to the battery 100 caused by collision. More specifically, the rigid material may be rigid foam that meets the requirement of no structural damage at a high temperature of 600 °C or higher.

In addition, when the heat-resistant material is a flexible material, the first protection mechanism 50 can deform within a certain range, such that the first protection mechanism 50 can be properly bent when the first protection mechanism 50 is mounted for the battery cell group 20, thereby making the mounting of the first protection mechanism 50 more convenient. More specifically, the flexible material may be mica paper or a ceramic composite tape that meets the requirement of no structural damage at a high temperature of 600 °C or higher.

It can be understood that the fact that the first protection mechanism 50 is made of a heat-resistant material may mean that at least a part of at least one component that forms the first protection mechanism 50 is made of a heat-resistant material.

The heat-resistant material may reduce the probability that the emissions melt through the first protection mechanism 50. This improves the reliability of the first protection mechanism 50 in shielding the first connecting tube 40 to some extent.

According to some embodiments of the present application, optionally, with continued reference to FIG. 8 and continued reference to FIG. 13, the battery 100 further includes a second connecting tube 41 and a second protection mechanism 53. The second connecting tube 41 is located on the side of the battery cell group 20 facing away from the first connecting tube 40 in the second direction Y. The second connecting tube 41 connects the second ends 32 of two adjacent thermal management components 30. The second protection mechanism 53 is configured to shield the second connecting tube 41 to limit contact between the emissions from the battery cell 21 and the second connecting tube 41.

The second connecting tube 41 is configured to connect the second ends 32 of two adjacent thermal management components 30. The fluid or the solid-liquid phase change material may flow between the two connected adjacent thermal management components 30 through the first connecting tube 40.

It can be understood that the second connecting tube 41 may be made of plastic, and the second connecting tube 41 may be connected to the second end 32 by using a binder; alternatively, the second connecting tube 41 may also be connected to the second end 32 in a manner in which the second connecting tube and the second end 32 are integrally formed, which is not limited in the embodiments of the present application.

That the second protection mechanism 53 is configured to shield the second connecting tube 41 means that at least a part of the second protection mechanism 53 is located between the position where the battery cell 21 discharges emissions and the second connecting tube 41.

Therefore, when the battery cell 21 discharges emissions due to thermal runaway, the second protection mechanism 53 can limit contact between the emissions and the second connecting tube 41, thereby reducing the probability that the emissions melt the second connecting tube 41, and further reducing the probability that a fluid leaks from the second connecting tube 41 due to discharge of the emissions from the battery cell 21, thereby improving the reliability of the battery 100 during use.

According to some embodiments of the present application, optionally, with continued reference to FIG. 8 and continued reference to FIG. 13, the second protection mechanism 53 includes a second protective cover 531, and the battery cell group 20 has a second side surface 213 facing the second connecting tube 41. The second protective cover 531 and the second side surface 213 jointly form a second accommodating cavity 502, and at least a part of the second connecting tube 41 is located in the second accommodating cavity 502.

The second protective cover 531 refers to a component that forms the second accommodating cavity 502 jointly with the second side surface 213.

The second side surface 213 refers to the surface of the battery cell 21 facing the second connecting tube 41 and perpendicular to the second direction Y.

The second accommodating cavity 502 is configured to accommodate at least a part of the second connecting tube 41, where the first accommodating cavity 501 may be unsealed.

It can be understood that at least a part of the second connecting tube 41 is arranged in the second accommodating cavity 502, such that when the pressure relief mechanism 211 discharges emissions, the emissions rebounding from the top wall 111 will first contact the inner wall of the case 10 and/or the outer side of the second protective cover 531, thereby limiting the contact between the emissions and the second connecting tube 41.

According to some embodiments of the present application, referring to FIGs. 5 and 11, the present application provides a battery 100. The battery cell group 20 includes a plurality of battery cells 21. The plurality of thermal management components 30 are spaced apart from each other in the first direction X. Each thermal management component 30 has a first end 31 and a second end 32 in the second direction Y, and one battery cell 21 is arranged between two adjacent thermal management components 30. The battery cell group 20 and the thermal management components 30 are accommodated in the case 10. The first connecting tube 40 is located between the first side wall 122 and the first side surface 212, and the first connecting tube 40 connects the first ends 31 of two adjacent thermal management components 30. The second connecting tube 41 is located on the side of the battery cell group 20 facing away from the first connecting tube 40 in the second direction Y, and the second connecting tube 41 connects the second ends 32 of two adjacent thermal management components 30. The first protection mechanism 50 includes a first protective cover 51 and a first covering plate 52. The first protective cover 51 includes a first top plate 511 and a first side plate 512. One end of the first top plate 511 is connected to the side surface of the battery cell group 20 facing the top wall 111, and the other end of the first top plate 511 is connected to the first side plate 512. The first top plate 511 shields the first connecting tube 40 in the third direction Z, and the first side plate 512 shields the first connecting tube 40 in the second direction Y. In the first direction X, an edge of the first top plate 511, an edge of the first side plate 512, the bottom wall 121, and the first side surface 212 form a first opening (not shown in the figures), and the first covering plate 52 is buckled on the first opening (not shown in the figures) and closes the first opening (not shown in the figures). The second protection mechanism 53 is sleeved outside the second connecting tube 41, and is symmetrically arranged with the first protection mechanism 50. Therefore, the emissions discharged from the pressure relief mechanism 211 are limited from contacting the first connecting tube 40 and the second connecting tube 41.

According to some embodiments of the present application, referring to FIGs. 8 and 13, the present application provides a battery 100. The battery cell group 20 includes a plurality of battery cells 21. The plurality of thermal management components 30 are spaced apart from each other in the first direction X. Each thermal management component 30 has a first end 31 and a second end 32 in the second direction Y, and one battery cell 21 is arranged between two adjacent thermal management components 30. The battery cell group 20 and the thermal management components 30 are accommodated in the case 10. The first connecting tube 40 is located between the first side wall 122 and the first side surface 212, and the first connecting tube 40 connects the first ends 31 of two adjacent thermal management components 30. The second connecting tube 41 is located on the side of the battery cell group 20 facing away from the first connecting tube 40 in the second direction Y, and the second connecting tube 41 connects the second ends 32 of two adjacent thermal management components 30. The first protection mechanism 50 includes a first protective cover 51 and a first covering plate 52. The first protective cover 51 includes a first top plate 511, a first side plate 512, and a first bottom plate 513. One end of the first top plate 511 is connected to the side surface of the battery cell group 20 facing the top wall 111, and the other end of the first top plate 511 is connected to the first side plate 512. One end of the first bottom plate 513 is connected to the battery cell group 20, the other end of the first bottom plate 513 is connected to the first side plate 512, and in the third direction Z, the first connecting tube 40 is located between the first top plate 511 and the first bottom plate 513. The first bottom plate 513 abuts against the bottom wall 121. In the first direction X, an edge of the first top plate 511, an edge of the first side plate 512, an edge of the first bottom plate 513, and the first side surface 212 form a first opening (not shown in the figures), and the first covering plate 52 is buckled on the first opening (not shown in the figures) and closes the first opening (not shown in the figures). The second protection mechanism 53 is sleeved outside the second connecting tube 41, and is symmetrically arranged with the first protection mechanism 50. Therefore, the emissions discharged from the pressure relief mechanism 211 are limited from contacting the first connecting tube 40 and the second connecting tube 41.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a battery cell group, comprising a plurality of battery cells;
a plurality of thermal management components, wherein the plurality of thermal management components are spaced apart from each other in a first direction, each of the thermal management components has a first end and a second end in a second direction, at least one battery cell is arranged between two adjacent thermal management components, and the first direction is perpendicular to the second direction;
a first connecting tube, located on a side of the battery cell group in the second direction, and the first connecting tube connecting the first ends of two adjacent thermal management components; and
a first protection mechanism, configured to shield the first connecting tube to limit contact between emissions from the battery cell and the first connecting tube.

2. The battery according to claim 1, wherein the battery further comprises a case, and the battery cells and the thermal management components are accommodated in the case;
the case comprises a bottom wall and a top wall arranged opposite to each other in a third direction, and a pressure relief mechanism is arranged at an end of the battery cell facing the top wall;
in the third direction, at least a part of the first protection mechanism is located between the top wall and the first connecting tube, and every two of the first direction, the second direction, and the third direction are perpendicular to each other.

3. The battery according to claim 2, wherein in the third direction, a projection of the first protection mechanism does not overlap with a projection of the pressure relief mechanism.

4. The battery according to claim 2 or 3, wherein the case has a first side wall and a second side wall arranged opposite to each other in the second direction;
in the second direction, the first connecting tube is located between the first side wall and the battery cell group, and at least a part of the first protection mechanism is located between the first side wall and the battery cell group.

5. The battery according to any one of claims 2 to 4, wherein the first protection mechanism comprises a first protective cover; the battery cell group has a first side surface facing the first connecting tube; the first protective cover and the first side surface jointly form a first accommodating cavity; and at least a part of the first connecting tube is located in the first accommodating cavity.

6. The battery according to claim 5, wherein the first protective cover is connected to the battery cell group and/or the case.

7. The battery according to claim 5 or 6, wherein the first protective cover comprises a first top plate and a first side plate; one end of the first top plate is connected to the battery cell group, and the other end of the first top plate is connected to the first side plate; the first top plate shields the first connecting tube in the third direction, and the first side plate shields the first connecting tube in the second direction.

8. The battery according to claim 7, wherein an end of the first side plate distal to the first top plate abuts against the bottom wall.

9. The battery according to claim 7 or 8, wherein the first protective cover further comprises a first bottom plate, one end of the first bottom plate is connected to the battery cell group, the other end of the first bottom plate is connected to the first side plate, and in the third direction, the first connecting tube is located between the first top plate and the first bottom plate.

10. The battery according to claim 9, wherein the first bottom plate abuts against the bottom wall.

11. The battery according to any one of claims 5 to 10, wherein first openings are formed at two ends of the first accommodating cavity in the first direction; the first protection mechanism further comprises a first covering plate, and the first covering plate closes the first opening.

12. The battery according to any one of claims 1 to 11, wherein the first protection mechanism is made of a heat-resistant material.

13. The battery according to any one of claims 2 to 12, wherein the battery further comprises:
a second connecting tube, located on a side of the battery cell group facing away from the first connecting tube in the second direction, the second connecting tube connecting the second ends of two adjacent thermal management components; and
a second protection mechanism, configured to shield the second connecting tube to limit contact between emissions from the battery cell and the second connecting tube.

14. The battery according to claim 13, wherein the second protection mechanism comprises a second protective cover; the battery cell group has a second side surface facing the second connecting tube; the second protective cover and the second side surface jointly form a second accommodating cavity; and at least a part of the second connecting tube is located in the second accommodating cavity.

15. An electric device, comprising the battery according to any one of claims 1 to 14, wherein the battery is configured to provide electric energy.
